## Europäisches Patentamt

## European Patent Office

## Office européen des brevets

(11) Veröffentlichungsnummer: **0 179 939 B1**

# EUROPÄISCHE PATENTSCHRIFT

(45) Veröffentlichungstag der Patentschrift:
08.02.89

(51) Int. Cl.⁴: **G 02 B 26/10**

(21) Anmeldenummer: **84113092.5**

(22) Anmeldetag: **30.10.84**

(54) Vorrichtung zur Lichtübertragung.

(43) Veröffentlichungstag der Anmeldung:
**07.05.86 Patentblatt 86/19**

(45) Bekanntmachung des Hinweises auf die Patenterteilung:
**08.02.89 Patentblatt 89/6**

(84) Benannte Vertragsstaaten:
**BE CH DE FR GB IT LI NL**

(56) Entgegenhaltungen:
**DE-A- 3 224 850**
**GB-A- 2 057 709**

(73) Patentinhaber: **DR.-ING. RUDOLF HELL GmbH,
Grenzstrasse 1-5, D-2300 Kiel 14 (DE)**

(72) Erfinder: **Deisler, Manfred, Bergkoppel 48,
D-2302 Flintbek (DE)**
Erfinder: **Lange, Helmut, Kätnersredder 96,
D-2314 Schönkirchen (DE)**
Erfinder: **Suhr, Holger, Kaiserstrasse 82,
D-2300 Kiel 14 (DE)**
Erfinder: **Parl, Ulrich, Preetzer Strasse 51,
D-2301 Raisdorf (DE)**
Erfinder: **Lachenmann, Horst, Grosser Hof 32,
D-2301 Mielkendorf (DE)**

**Beschreibung**

Die Erfindung betrifft eine Lichtübertragungs-Vorrichtung zum Lichttransport zwischen einem festen und einem beweglichen Ort. Die Lichtübertragungs-Vorrichtung findet beispielsweise in der elektronischen Reproduktionstechnik Anwendung.

Eine Lichtübertragungs-Vorrichtung der genannten Art besteht üblicherweise aus mindestens einem Lichtleitkabel und einem beweglichen Führungselement für das Lichtleitkabel. Als Führungselemente werden bei herkömmlichen Lichtübertragungs-Vorrichtungen z.B. Kabelketten verwendet. Das Lichtleitkabel besteht aus dem eigentlichen Lichtleiter, der eine Einzelfaser oder ein Faserbündel sein kann, und einer schlauchartigen Ummantelung oder Schutzhülle.

Eine solche Lichtübertragungs-Vorrichtung findet beispielsweise in der elektronischen Reproduktionstechnik bei einem Reproduktionsgerät zur Herstellung von Halbton-Farbauszügen oder von gerasterten Farbauszügen durch optoelektronische Abtastung einer Vorlage und durch Belichten eines Aufzeichnungsmediums Anwendung. Bei einem elektronischen Reproduktionsgerät zur Herstellung von Halbton-Farbauszügen wird in einer Laser-Lichtquelle ein kohärentes Laser-Lichtbündel erzeugt, welches durch das bei der Vorlagen-Abtastung gewonnene Bildsignal in einem ortsfesten Modulator in der Helligkeit moduliert wird. Das modulierte Laser-Lichtbündel wird von dem ortsfesten Modulator über eine Lichtübertragungs-Vorrichtung mit einer Einzelfaser an ein Aufzeichnungsorgan transportiert. Das Aufzeichnungsorgan bewegt sich axial an einer Aufzeichnungstrommel entlang, auf die das Aufzeichnungsmedium aufgespannt ist. Das im Aufzeichnungsorgan aus der Austrittsfläche der Einzelfaser austretende modulierte Laser-Lichtbündel wird mittels einer Blende und eines Objektivs als Belichtungspunkt auf dem Aufzeichnungsmedium abgebildet, welches durch die Relativbewegung zwischen Aufzeichnungsorgan und Aufzeichnungstrommel punkt- und zeilenweise belichtet wird.

In einem elektronischen Reproduktionsgerät zur Herstellung von gerasterten Farbauszügen werden in einer Laser-Lichtquelle mehrere kohärente Teillichtbündel erzeugt, die in einem ortsfesten Modulator vom Bildsignal getrennt ein- und ausgeschaltet und über die Einzelfasern eines Faserbündels der Lichtübertragungs-Vorrichtung an das bewegliche Aufzeichnungsorgan transportiert werden. Im Aufzeichnungsorgan sind die Austrittsflächen der Einzelfasern nebeneinander auf einer Mantellinie der Aufzeichnungstrommel angeordnet, so dass die aus den Einzelfasern austretenden modulierten Teillichtbündel mittels eines Objektivs als eine Anzahl nebeneinanderliegender Belichtungspunkte auf dem Aufzeichnungsmedium abgebildet werden. Durch die Relativbewegung zwischen Aufzeichnungstrommel und Aufzeichnungsorgan erzeugen die Belichtungspunkte nebeneinanderliegende Schreiblinien, deren Längen jeweils von der Einschaltdauer der Teillichtbündel abhängig sind. Jeder Rasterpunkt setzt sich aus solchen Schreiblinien zusammen, wobei Form und Grösse der Rasterpunkte von den Längen der Schreiblinien bzw. von der jeweiligen Einschaltdauer der Teillichtbündel abhängen.

Üblicherweise werden zur Lichtübertragung Lichtleiter vom Multimode-Typ verwendet, da es bei einem Lichtleiter vom Monomode-Typ aufgrund seines kleinen Kerndurchmessers sehr schwierig ist, kohärentes Licht stabil einzukoppeln. Wird aber in einen Lichtleiter vom Multimode-Typ kohärentes Licht eingekoppelt, so bilden sich mehrere Moden aus, die aufgrund der Moden-Interferenzen auf seiner Austrittsfläche ein Moden-Muster in Form von hellen und dunklen Flecken und damit eine inhomogene Lichtverteilung in der Austrittsfläche erzeugen.

Erschwerend kommt hinzu, dass sich durch Biegung und/oder Verdrillung bei einer Bewegung des Lichtleiters das Moden-Muster in der Austrittsfläche verschiebt, wodurch sich die Lichtverteilung und zusätzlich auch noch die Lichtintensität in der Austrittsfläche zeitlich ändert. Die Problematik der Moden-Bildung wird z.B. in der Zeitschrift «Laser Focus», Sept. 1981, Seiten 109 bis 115, und in der Zeitschrift «Elektronik», Nr. 19, 1981, Seite 16, aufgezeigt.

Bei der Verwendung einer herkömmlichen Lichtübertragungs-Vorrichtung mit einer Kabelkette und einem Lichtleiter vom Multimode-Typ zwischen dem ortsfesten Modulator und dem verschiebbaren Aufzeichnungsorgan kommt es beim Abrollen der Kabelkette zwangsläufig zu wechselnden Reibzuständen des Lichtleitkabels und damit zu einer kontinuierlichen und/oder sprungartigen Änderung der mechanischen Spannung zwischen Kern und Mantel des Lichtleiters einerseits und zwischen Lichtleiter und Schutzhülle andererseits.

Die durch den Bewegungsablauf bedingte kontinuierliche oder sprungartige Änderung der Lichtverteilung in der Austrittsfläche des Lichtleiters führt bei einem elektronischen Reproduktionsgerät zur Herstellung von Halbton-Farbauszügen zu einer inhomogenen und sich zeitlich ändernden Ausleuchtung der Blende bzw. Lichtverteilung innerhalb des Belichtungspunktes, die sich durch die Aperturbegrenzung der Blende noch verstärkt. Die Folge sind Dichteänderungen auf dem Aufzeichnungsmedium, so dass eine an sich homogene Halbtonfläche streifig belichtet wird. Dagegen führt bei einem Reproduktionsgerät zur Herstellung von gerasterten Farbauszügen insbesondere die zeitliche und in den einzelnen Teillichtbündeln unterschiedliche Intensitätsänderung zu unterschiedlichen Dichten in den Schreiblinien bzw. Rasterpunkten.

In beiden Fällen entstehen in den Farbauszügen störende Dichteänderungen auf dem Aufzeichnungsmedium, welche die Reproduktionsqualität erheblich beeinträchtigen.

Es hat sich in der Praxis gezeigt, dass die durch eine gleichförmige Bewegung bzw. Spannungsänderung des Lichtleiters bedingte allmähliche, grossflächige Dichteänderung sich für das menschliche Auge nicht so störend bemerkbar macht wie eine durch sprungartige Bewegung bzw. Spannungsänderung verursachte sprungartige, kleinflächige Dichteänderung.

Zur Vermeidung einer streifigen Belichtung bei einem elektronischen Reproduktionsgerät für Halbton-Farbauszüge ist es aus der DE-PS 2 952 209 bekannt, die im Aufzeichnungsorgan aus der Austrittsfläche des Lichtleiters austretenden Moden mit einem Streumedium aufzufächern, die aufgefächerten Moden mit einer Sammellinse in einem Überlagerungsbereich zu überlagern und die Blende im Überlagerungsbereich anzuordnen, wodurch stets eine homogene Blendenausleuchtung und eine gleichförmige Intensitätsverteilung für den Belichtungspunkt erreicht wird. Nachteil dieser bekannten optischen Anordnung ist, dass sie nur bei der Aufzeichnung von Halbton-Farbauszügen verwendet werden kann.

Eine andere Lösung zur Vermeidung einer streifigen Belichtung wird in der DE-OS 3 224 850 angegeben. Dort wird von der Erkenntnis ausgegangen, dass die Moden-Flecken bei Biegung des Lichtleiters vorzugsweise in radialer Richtung der kreisförmig angenommenen Austrittsfläche und damit in die Blendenöffnung hinein- und aus ihr herauswandern, wodurch grosse zeitliche Änderungen der Lichtverteilung innerhalb der Blendenöffnung auftreten. Dagegen wandern die Moden-Flecken bei Verdrillung des Lichtleiters in Umfangsrichtung der kreisförmigen Austrittsfläche und damit innerhalb der Blendenöffnung, wodurch die zeitliche Änderung der Intensitätsverteilung verringert wird. Das Führungselement der Lichtübertragungs-Vorrichtung ist dort als schwenkbarer Hebelmechanismus ausgebildet, durch den das Lichtleichtkabel derart geführt wird, dass es lediglich verdrillt, nicht aber gebogen wird. Diese Lösung ist aber sehr aufwendig.

Aufgabe der vorliegenden Erfindung ist es daher, eine einfache Lichtübertragungs-Vorrichtung zu schaffen, bei der im Bewegungsablauf des Lichtleiters insbesondere sprungartige Änderungen der Bewegung und damit auch der Lichtverteilung und Lichtintensität beseitigt werden. Durch die Anwendung einer solchen Lichtübertragungs-Vorrichtung bei einem elektronischen Reproduktionsgerät werden dadurch in vorteilhafter Weise die besonders störenden sprungartigen Dichteänderungen auf dem Aufzeichnungsmedium vermieden.

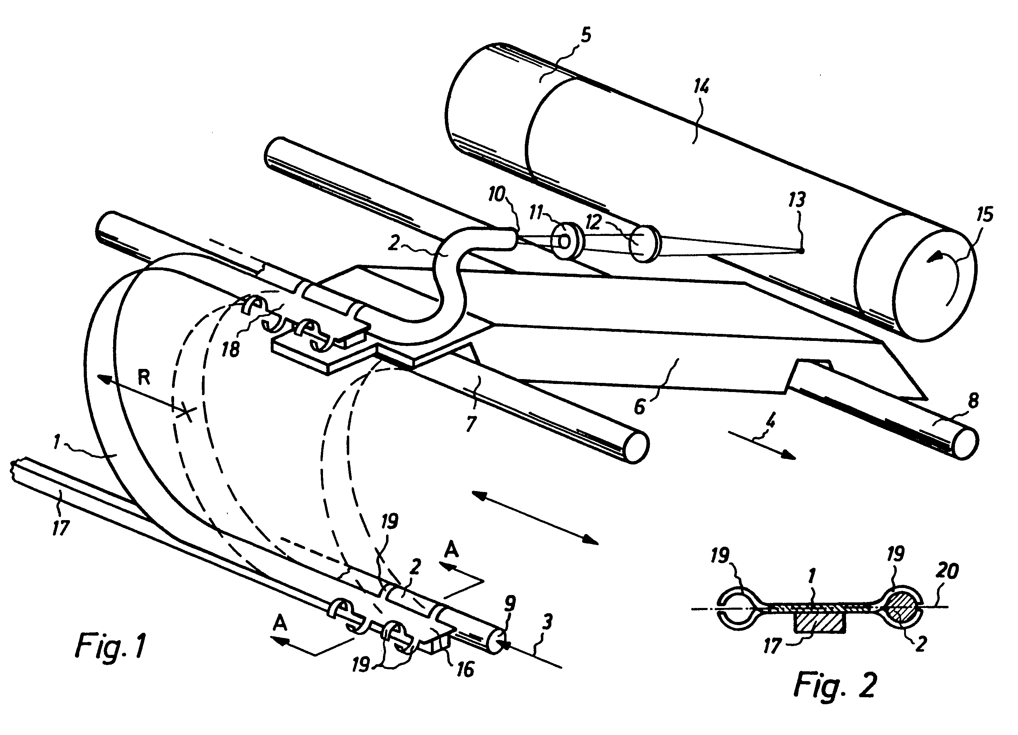

Die Erfindung wird im folgenden anhand der Figuren 1 und 2 näher erläutert. Es zeigen:

Fig. 1 ein Ausführungsbeispiel einer Lichtübertragungs-Vorrichtung, und

Fig. 2 ein Schnittbild durch die Lichtübertragungs-Vorrichtung.

Fig. 1 zeigt in einer perspektivischen Darstellung ein Ausführungsbeispiel der erfindungsgemässen Lichtübertragungs-Vorrichtung, die beispielsweise bei einem elektronischen Reproduktionsgerät zur Herstellung von Halbton-Farbauszügen Anwendung findet, von dem nur eine Aufzeichnungstrommel und ein Aufzeichnungsorgan angedeutet sind.

Die Lichtübertragungs-Vorrichtung, welche aus einem beweglichen Führungselement 1 und aus mindestens einem Lichtleitkabel 2 besteht, dient zum Transport eines von einem nicht dargestellten ortsfesten Modulator in Abhängigkeit eines Bildsignals modulierten Lichtbündels 3 an ein Aufzeichnungsorgan, das sich während der Belichtung des Farbauszuges axial in Richtung eines Pfeiles 4 an einer Aufzeichnungstrommel 5 des Reproduktionsgerätes entlang bewegt. Von dem Aufzeichnungsorgan ist nur eine Grundplatte 6 dargestellt, die auf zwei in Axialrichtung der Aufzeichnungstrommel 5 ausgerichteten Rohrführungen 7 und 8 gleitet.

Das modulierte Lichtbündel 3 wird in die Eintrittsfläche 9 des Lichtleitkabels 2 eingekoppelt, zum Aufzeichnungsorgan transportiert, wo es an einer Austrittsfläche 10 des Lichtleitkabels 2 wieder austritt. Das austretende modulierte Lichtbündel 3 wird im Aufzeichnungsorgan mit Hilfe eines optischen Systems aus Blende 11 und Objektiv 12 als Belichtungspunkt 13 auf einem Aufzeichnungsmedium 14 abgebildet, das auf der Aufzeichnungstrommel 5 aufgespannt ist. Blende 11 und Objektiv 12 sind in geeigneter Weise an der Grundplatte 6 des Aufzeichnungsorgans befestigt. Durch die Axialbewegung des Aufzeichnungsorgans in Richtung des Pfeiles 4 und durch die Drehbewegung der Aufzeichnungstrommel 5 in Richtung eines Pfeiles 15 wird das Aufzeichnungsmedium 14, z.B. ein Film, punkt- und zeilenweise belichtet.

Der belichtete und entwickelte Film ist der gewünschte Farbauszug.

Das flexible Führungselement 1 der Lichtübertragungs-Vorrichtung ist mit einem Ende 16 an einer Schiene 17 befestigt, welche als Anlegefläche für das Führungselement 1 ausgebildet ist.

Die Schiene 17 ist parallel zu den Rohrführungen 7 und 8 ausgerichtet und mit dem ortsfesten Teil des Reproduktionsgerätes verbunden. Das andere Ende 18 des Führungselementes 1 ist im Bogen an die Grundplatte 6 des Aufzeichnungsorgans geführt und dort ebenfalls befestigt. Bei der Vorschubbewegung des Aufzeichnungsorgans in Richtung des Pfeiles 4 hebt sich das flexible Führungselement 1 bei konstantem Radius R von der Schiene 17 fortschreitend ab. Nach gewissen Vorschubzeiten erreichte Positionen des Aufzeichnungsorgans bzw. des Führungselementes 1 sind gestrichelt angedeutet.

Das Lichtleitkabel 2 besteht aus dem eigentlichen Lichtleiter und einer Schutzhülle für den Lichtleiter. Der Lichtleiter selbst ist eine Einzelfaser mit Kern und Mantel oder ein Bündel von Einzelfasern. Die Einzelfaser ist vom Multimode-Typ und beispielsweise eine Stufenfaser oder Gradientenfaser. Das flexible Führungselement 1 ist in Bewegungsrichtung biegsam und senkrecht dazu möglichst biegesteif gestaltet. Das flexible Führungselement 1 ist im Ausführungsbeispiel ein Metallband, vorzugsweise ein Federstahlband. Es kann aber auch aus Federdraht, einem Kunststoffband oder ähnlichem bestehen.

An mindestens einer der Längsseiten des Führungselementes 1 ist ein Lichtleitkabel 2 derart angeordnet und befestigt, dass das Lichtleitkabel 2 stets im Bereich der Biegeebene bzw. der neutralen Faser des Führungselementes 1, vorzugsweise direkt in der Biegeebene bzw. neutralen Faser, liegt. Dabei ist die Biegeebene bzw. neutrale Faser diejenige Ebene des Führungselementes 1, in der die beim Abhebevorgang des flexiblen Führungselementes 1 auftretenden Biegespannungen nahezu Null oder Null sind.

Durch die erfindungsgemässe Ausgestaltung der Lichtübertragungs-Vorrichtung werden in vorteilhafter Weise sprungartige Relativbewegungen zwischen Führungselement 1 und Lichtleitkabel 2 einerseits und zwischen Lichtleiter und Ummantelung andererseits vermieden, wodurch für das Lichtleitkabel ein gleichförmiger Bewegungsablauf erreicht wird. Dieser gleichförmige Bewegungsablauf hat wiederum zur Folge, dass in Lichtleitern vom Multimode-Typ keine sprungartigen Änderungen der Lichtverteilung und/oder Lichtintensitäten auftreten.

Zur Befestigung des Lichtleitkabels 2 an dem Führungselement 1 weist dieses im dargestellten Ausführungsbeispiel an mindestens einer der Längsseiten Zungen auf, die über die gesamte Länge des Führungselementes 1 verteilt sind. Die Zungen sind beispielsweise aus dem Führungselement herausgestanzt. Die Zungen sind derartig zu Befestigungsschellen 19 geformt, dass jeweils zwei benachbarte Befestigungsschellen 19 das Lichtleitkabel 2 von oben und unten umfassen. In der Figur sind nur an einer Längsseite des Führungselementes 1 ein Lichtleitkabel 2 und nur einige der Befestigungsschellen 19 angedeutet. Andere Befestigungsarten liegen im Rahmen der Erfindung.

Die Erfindung ist nicht auf das dargestellte Anwendungsbeispiel der Lichtübertragungs-Vorrichtung bei einem elektronischen Reproduktionsgerät zur Herstellung von Halbton-Farbauszügen beschränkt. Die erfindungsgemässe Lichtübertragungs-Vorrichtung kann mit Vorteil auch bei einem elektronischen Reproduktionsgerät zur Herstellung von gerasterten Farbauszügen, zur Abtastung und Aufzeichnung sowie allgemein überall dort eingesetzt werden, wo Licht von einem ortsfesten Ort an einen beweglichen Ort oder umgekehrt zu transportieren ist.

Zur Verdeutlichung zeigt Fig. 2 noch ein vergrössertes Schnittbild A-A durch die Lichtübertragungs-Vorrichtung senkrecht zur Bewegungsrichtung im Bereich der Schiene 17 als Anlegefläche. Sichtbar sind das Führungselement 1 mit den Befestigungsschellen 19 und das Lichtleitkabel 2. Ferner ist noch die Biegeebene bzw. neutrale Faser 20 des Führungselementes 1 angedeutet, in deren Bereich das Lichtleitkabel 2 seitlich des Führungselementes befestigt ist.

## Patentansprüche

1. Vorrichtung zur Lichtübertragung zwischen einem festen und einem in vorgegebener Bewegungsrichtung beweglichen Ort, bestehend aus mindestens einem Lichtleitkabel und einem flexiblen Führungselement für das Lichtleitkabel, dadurch gekennzeichnet, dass

a) das flexible Führungselement (1) einen zumindest angenähert einheitlichen Querschnitt mit einer Achse geringsten Widerstandsmoments aufweist,

b) die Enden des Führungselementes (1) im Bereich des festen und des beweglichen Ortes derart an einem festen Organ (17) bzw. an einem in der Bewegungsrichtung verschiebbaren Organ (6) befestigt sind, dass die genannten Querschnittsachsen an jeder Stelle des Führungselementes (1) zueinander parallel und senkrecht zur Bewegungsrichtung verlaufen, und

c) das Lichtleitkabel (2) an dem flexiblen Führungselement (1) zumindest annähernd in der durch die genannten Querschnittsachsen definierten Biegefläche befestigt ist.

2. Vorrichtung nach Anspruch 1, dadurch gekennzeichnet, dass das flexible Führungselement (1) ein Metallband, vorzugsweise ein Federstahlband, ist.

3. Vorrichtung nach Anspruch 1 oder 2, dadurch gekennzeichnet, dass das flexible Führungselement (1) mindestens an einer seiner Längsseiten Befestigungsschellen (19) für das Lichtleitkabel (2) umfasst.

4. Vorrichtung nach einem der Ansprüche 1 bis 3, dadurch gekennzeichnet, dass das feste Organ (17) eine ebene Abwälzfläche für das Führungselement (1) aufweist, die sich in Bewegungsrichtung parallel zu den genannten Querschnittsachsen erstreckt.

## Claims

1. Device for light transmission between a fixed point and one movable in a preset direction of motion, comprising at least one light conductor cable and a flexible guide element for the light conductor cable, characterised in that

a) the flexible guide element (1) has an at least approximately uniform cross-section with an axis of minimum moment of resistance,

b) the ends of the guide element (1) are secured in the region of the fixed and movable points on a stationary member (17) or a member (6) displaceable in the direction of motion, in such manner that the said cross-sectional axes extend mutually parallel and at right angles to the direction of motion at any point of the guide element (1), and

c) the light conductor cable (2) is fastened on the flexible guide element (1) at least approximately in the flexing area defined by the said cross-sectional axes.

2. Device according to claim 1, characterised in that the flexible guide element (1) is a metal strip, preferably a spring steel strip.

3. Device according to claim 1 or 2, characterised in that the flexible guide element (1) incorporates fastening clips (19) for the light conductor cable (2) on at least one of its longitudinal sides.

4. Device according to one of the claims 1 to 3, characterised in that the stationary member (17) has a plane rolling surface for the guiding element (1) which extends parallel to the said cross-sectional axes in the direction of motion.

## Revendications

1. Dispositif de transfert de lumière entre un emplacement fixe et un emplacement mobile dans une direction de déplacement prédéfinie, dispositif constitué d'au moins un câble conducteur de la lumière et d'un élément flexible de guidage pour ce câble conducteur de la lumière, dispositif caractérisé en ce que:

a) l'élément flexible de guidage (1) a une section transversale tout au moins approximativement homogène avec un axe de moment résistant très minime, b) les extrémités de l'élément de guidage (1), au voisinage de l'emplacement fixe et de l'emplacement mobile, sont fixées à un organe fixe (17) ou bien à un organe (6) susceptible de se déplacer dans la direction de déplacement prédéfinie, de telle sorte que les axes précités de section transversale sont, en tout point de l'élément de guidage (1), parallèles entre eux et perpendiculaires à la direction de déplacement prédéfinie,

c) le câble conducteur de la lumière (2) est fixé à l'élément flexible de guidage (1) au moins approximativement dans la surface de flexion définie par les axes précités de section transversale.

2. Dispositif selon la revendication 1, caractérisé en ce que l'élément flexible de guidage (1) est une bande métallique, de préférence une bande d'acier à ressort.

3. Dispositif selon la revendication 1 ou 2, caractérisé en ce que l'élément flexible de guidage (1) comprend, au moins sur un de ses côtés longitudinaux, des brides de fixation (19) pour le câble conducteur de la lumière (27.

4. Dispositif selon une des revendications 1 à 3, caractérisé en ce que l'organe fixe (17) comporte une surface plane de développement pour l'élément de guidage (1), cette surface s'étendant dans la direction de déplacement prédéfinie, parallèlement aux axes précités de section transversale.

Fig. 1

Fig. 2

EP 0 179 939 B1